# EUROPEAN PATENT APPLICATION

(11) **EP 4 567 931 A1**
(43) Date of publication of application: **11.06.2025**
(21) Application number: 23849799.4
(22) Date of filing: 28.06.2023
(51) Int. Cl.: H01M 4/525, C01G 53/00, H01M 4/36, H01M 4/505

(54) **POSITIVE ELECTRODE ACTIVE MATERIAL FOR NONAQUEOUS ELECTROLYTE SECONDARY BATTERY, AND NONAQUEOUS ELECTROLYTE SECONDARY BATTERY**

(30) Priority: 05.08.2022 JP 2022125727
(71) Applicant: Panasonic Intellectual Property Management Co., Ltd., Kadoma-shi, Osaka 571-0057 (JP)
(72) Inventor: FUJITANI Naoya, Kadoma-shi, Osaka 571-0057 (JP); AOKI Yoshinori, Kadoma-shi, Osaka 571-0057 (JP); JITO Daizo, Kadoma-shi, Osaka 571-0057 (JP); OGASAWARA Takeshi, Kadoma-shi, Osaka 571-0057 (JP)
(74) Representative: Novagraaf International SA
(86) International application number: PCT/JP2023/023993
(87) International publication number: WO 2024/029240

(57) **Abstract**

Provided is a positive electrode active material that contributes to improvement in charge/discharge cycle characteristics and high-temperature storage characteristics of a nonaqueous electrolyte secondary battery. This positive electrode active material included in a nonaqueous electrolyte secondary battery contains a lithium transition metal composite oxide having a layered structure, and an additive. The lithium transition metal composite oxide has a prescribed composition and contains secondary particles formed by the agglomeration of primary particles. On the surface of the primary particles, there exists a surface modification layer containing at least one element of Ca and Sr and at least one element selected from the group consisting of W, Mo, Ti, Si, Nb, and Zr. The additive contains at least one of a phosphate, an oxide, a hydroxide, and a fluoride containing at least one element selected from the group consisting of Ti, Al, W, Zr, Mg, Co, B, and Si.

## Description

### TECHNICAL FIELD

The present disclosure relates to a positive electrode active material for non-aqueous electrolyte secondary battery and a non-aqueous electrolyte secondary battery.

### BACKGROUND

In recent years, applications of non-aqueous electrolyte secondary batteries have expanded to power sources for electric vehicles and power storage devices for utilizing renewable natural energy. Characteristics required in positive electrode active materials used in non-aqueous electrolyte secondary batteries accordingly vary depending on the applications. For example, Patent Literature 1 discloses a lithium transition metal composite oxide which contains Ca and W in a predetermined ratio in order to achieve both a favorable low-temperature output characteristic and a favorable high-temperature cycle characteristic.

### CITATION LIST

### PATENT LITERATURE

PATENT LITERATURE 1: PCT International Publication No. WO 2012/035664

### SUMMARY

A lithium transition metal composite oxide with a Ni content of greater than or equal to 75 % has a large initial charge capacity but tends to cause side reactions with the non-aqueous electrolyte, which may result in deterioration of the charge-discharge cycle characteristic. Further, as a result of intensive research by the present inventors, it was found that when a non-aqueous electrolyte secondary battery is maintained at high temperatures, hydrogen fluoride generated due to decomposition of the non-aqueous electrolyte may react with the positive electrode, which may cause an increase in reaction resistance. In the technique described in Patent Literature 1, no consideration has been made regarding improving battery characteristics when using a lithium transition metal composite oxide with a high Ni content, and there is still room for improvement.

An object of the present disclosure is to provide a positive electrode active material which contributes to improving the charge-discharge cycle characteristic and high-temperature storage characteristic of a non-aqueous electrolyte secondary battery.

A positive electrode active material for non-aqueous electrolyte secondary battery according to one aspect of the present disclosure includes a lithium transition metal composite oxide having a layered structure, and an additive. The lithium transition metal composite oxide is represented by general formula LiₓNiₐCo_{b}Mn_{c}M1ₐM2ₑO_{2-y} (where 0.95 ≤ x ≤ 1.05, 0.75 ≤ a ≤ 0.95, 0 ≤ b ≤ 0.15, 0 ≤ c ≤ 0.25, 0 ≤ d ≤ 0.10, 0 < e ≤ 0.03, 0 ≤ y < 0.05, a+b+c+d+e = 1, M1 is at least one element selected from the group consisting of W, Mg, Mo, Nb, Ti, Si, Al, and Zr, and M2 is at least one element from among Ca and Sr), and includes secondary particles formed by aggregation of primary particles. A surface modification layer containing at least one element from among Ca and Sr and also containing at least one element selected from the group consisting of W, Mo, Ti, Si, Nb, and Zr is present at the surface of the primary particles. The additive includes at least one of a phosphate, an oxide, a hydroxide, and a fluoride containing at least one element selected from the group consisting of Ti, Al, W, Zr, Mg, Co, B, and Si.

A non-aqueous electrolyte secondary battery according to one aspect of the present disclosure includes a positive electrode containing the above-described positive electrode active material, a negative electrode, and a non-aqueous electrolyte.

According to the positive electrode active material for non-aqueous electrolyte secondary battery according to one aspect of the present disclosure, it is possible to provide a non-aqueous electrolyte secondary battery in which the charge-discharge cycle characteristic and the high-temperature storage characteristic are improved.

### BRIEF DESCRIPTION OF DRAWINGS

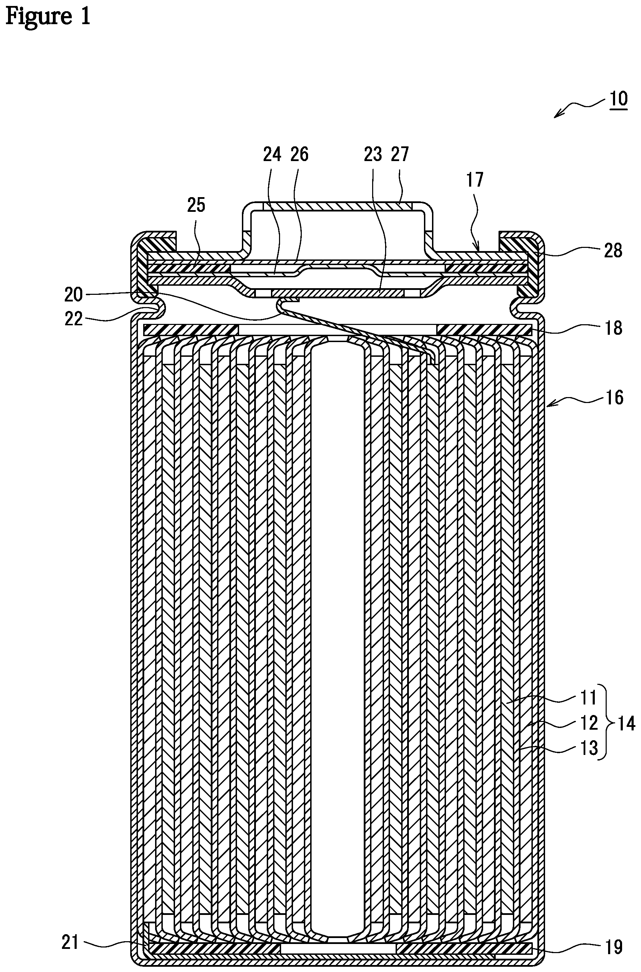

FIG. 1 is a longitudinal cross-sectional view of a non-aqueous electrolyte secondary battery according to an example embodiment.

### DESCRIPTION OF EMBODIMENTS

A layered structure of a lithium transition metal composite oxide includes a transition metal layer and a Li layer, and battery charge-discharge reaction proceeds as Li ions present in the Li layer reversibly move in and out. A lithium transition metal composite oxide containing Ni as the main component is generally known as a high-capacity positive electrode active material, and the Ni content in the lithium transition metal composite oxide is preferably greater than or equal to 75 mol% based on the total number of moles of metal elements other than Li. In addition to Ni, the lithium transition metal composite oxide may contain Co in an amount in the range from 0 mol% to 15 mol%, Mn in an amount in the range from 0 mol% to 25 mol%, and M1 in an amount in the range from 0 mol% to 10 mol% (M1 is at least one element selected from W, Mg, Mo, Nb, Ti, Si, Al, and Zr), where the amounts are based on the total number of moles of metal elements other than Li.

However, a secondary battery using such a lithium transition metal composite oxide may undergo deterioration of the charge-discharge cycle characteristic due to side reactions with the non-aqueous electrolyte. Further, as a result of intensive research by the present inventors, it was found that when a non-aqueous electrolyte secondary battery is maintained at high temperatures, hydrogen fluoride generated due to decomposition of the non-aqueous electrolyte may react with the positive electrode, which may cause an increase in reaction resistance. This is presumed to occur because hydrogen fluoride reacts with the lithium transition metal composite oxide, and the resulting product deposits on the surface of the lithium transition metal composite oxide, or the transition metal is eluted from the lithium transition metal composite oxide.

The present inventors have conducted intensive studies to solve the above problem, and found as a result that the charge-discharge cycle characteristic and the high-temperature storage characteristic can be improved by forming a surface modification layer containing at least one element selected from Ca and Sr and also containing at least one element selected from the group consisting of W, Mo, Ti, Si, Nb, and Zr at the surface of the primary particles of the lithium transition metal composite oxide, and by further adding, to the lithium transition metal composite oxide, an additive including at least one of a phosphate, an oxide, a hydroxide, and a fluoride containing at least one element selected from the group consisting of Ti, Al, W, Zr, Mg, Co, B, and Si. It is presumed that the surface modification layer suppresses side reactions with the non-aqueous electrolyte, and that the lithium transition metal composite oxide is protected from hydrogen fluoride by causing the additive to react with hydrogen fluoride.

An example embodiment of a non-aqueous electrolyte secondary battery according to the present disclosure will now be described in detail. Although a cylindrical battery in which a spiral-type electrode assembly is housed in a cylindrical outer casing is described below as an example, the electrode assembly is not limited to being of a spiral type, and may be of a laminated type formed by alternately laminating a plurality of positive electrodes and a plurality of negative electrodes one by one via separators. Further, the outer casing is not limited to being cylindrical, and may be, for example, rectangular, coin-shaped, or the like, or may be a battery housing composed of a laminate sheet including a metal layer and a resin layer.

FIG. 1 is an axial cross-sectional view of a cylindrical secondary battery 10 according to an example embodiment. As shown in FIG. 1, the secondary battery 10 comprises a spiral-type electrode assembly 14, an electrolyte, and an outer casing 16 that houses the electrode assembly 14 and the electrolyte. The electrode assembly 14 includes a positive electrode 11, a negative electrode 12, and separators 13, and has a spiral structure formed by winding the positive electrode 11 and the negative electrode 12 in a spiral shape with the separators 13 interposed. The outer casing 16 is a bottomed cylindrical metal container having an opening at one axial end, and the opening of the outer casing 16 is closed by a sealing assembly 17. In the following description, for convenience of explanation, the side of the battery toward the sealing assembly 17 will be referred to as "upper", and the side toward the bottom of the outer casing 16 will be referred to as "lower".

The positive electrode 11, the negative electrode 12, and the separators 13, which constitute the electrode assembly 14, are all elongate rectangular members, and are alternately laminated in the radial direction of the electrode assembly 14 by being wound lengthwise in a spiral shape. The separators 13 isolate the positive electrode 11 and the negative electrode 12 from each other. The negative electrode 12 is formed to have a size slightly larger than that of the positive electrode 11 in order to prevent lithium deposition. That is, the negative electrode 12 is formed to be longer than the positive electrode 11 in the lengthwise direction and in the widthwise direction. The separators 13 provided as two sheets are formed to have a size slightly larger than at least the positive electrode 11, and are arranged, for example, to sandwich the positive electrode 11. The electrode assembly 14 has a positive electrode lead 20 connected to the positive electrode 11 by welding or the like, and a negative electrode lead 21 connected to the negative electrode 12 by welding or the like. In the electrode assembly 14, the lengthwise direction of the positive electrode 11 and the negative electrode 12 corresponds to the winding direction, and the widthwise direction of the positive electrode 11 and the negative electrode 12 corresponds to the axial direction. That is, the end faces, in the widthwise direction, of the positive electrode 11 and the negative electrode 12 form the axial end faces of the electrode assembly 14.

Above and below the electrode assembly 14, insulating plates 18, 19 are provided respectively. In the example shown in FIG. 1, the positive electrode lead 20 extends through a through hole in the insulating plate 18 and toward the sealing assembly 17, while the negative electrode lead 21 extends outside the insulating plate 19 and toward the bottom of the outer casing 16. The positive electrode lead 20 is connected by welding or the like to the lower surface of an internal terminal plate 23 of the sealing assembly 17, and a cap 27, which is the top plate of the sealing assembly 17 electrically connected to the internal terminal plate 23, serves as the positive electrode terminal. The negative electrode lead 21 is connected by welding or the like to the inner surface of the bottom of the outer casing 16, and the outer casing 16 serves as the negative electrode terminal.

A gasket 28 is provided between the outer casing 16 and the sealing assembly 17 to ensure airtightness inside the battery. The outer casing 16 has a grooved portion 22 formed thereon, where a part of a side wall projects inward, and which supports the sealing assembly 17. The grooved portion 22 is preferably formed in an annular shape along the circumferential direction of the outer casing 16, and supports the sealing assembly 17 on its upper surface. The sealing assembly 17 is fixed to an upper part of the outer casing 16 by means of the grooved portion 22 and an opening end of the outer casing 16 which is crimped to the sealing assembly 17.

The sealing assembly 17 has a structure obtained by laminating, in order from the electrode assembly 14 side, the internal terminal plate 23, a lower vent member 24, an insulating member 25, an upper vent member 26, and the cap 27. Each of the members constituting the sealing assembly 17 has, for example, a disk shape or a ring shape, and the respective members except the insulating member 25 are mutually electrically connected. The lower vent member 24 and the upper vent member 26 are connected to each other at their central portions, and the insulating member 25 is interposed between peripheral edge portions of these vent members. When the internal pressure of the battery increases due to abnormal heat generation, the lower vent member 24 deforms and ruptures in a manner pushing up the upper vent member 26 toward the cap 27, and the current path between the lower vent member 24 and the upper vent member 26 is thereby cut off. When the internal pressure increases further, the upper vent member 26 ruptures, and gas is discharged from an opening in the cap 27.

A detailed description will now be given regarding the positive electrode 11, the negative electrode 12, the separators 13, and the non-aqueous electrolyte, which constitute the secondary battery 10, and in particular regarding the positive electrode 11.

### [Positive Electrode]

The positive electrode 11 comprises, for example, a positive electrode current collector and a positive electrode mixture layer formed on a surface of the positive electrode current collector. The positive electrode mixture layer is preferably formed on both sides of the positive electrode current collector. As the positive electrode current collector, it is possible to use a foil of a metal such as aluminum or an aluminum alloy which is stable in the potential range of the positive electrode 11, a film having such a metal disposed on its surface layer, or the like. The thickness of the positive electrode current collector is, for example, greater than or equal to 10 µm and less than or equal to 30 µm.

The positive electrode mixture layer contains, for example, a positive electrode active material, a conductive agent, and a binder. The thickness of the positive electrode mixture layer is, for example, greater than or equal to 10 µm and less than or equal to 150 µm on one side of the positive electrode current collector. The positive electrode 11 can be produced, for example, by applying a positive electrode mixture slurry containing the positive electrode active material, the conductive agent, and the like onto the surfaces of the positive electrode current collector, and, after drying the applied coating, rolling the coating to form positive electrode mixture layers on both sides of the positive electrode current collector.

Examples of the conductive agent contained in the positive electrode mixture layer include carbon-based particles such as carbon black (CB), acetylene black (AB), Ketjenblack, carbon nanotubes (CNT), graphene, and graphite. A single type among these may be used alone, or two or more types may be used in combination.

Examples of the binder contained in the positive electrode mixture layer include fluororesins such as polytetrafluoroethylene (PTFE) and polyvinylidene fluoride (PVDF), polyimide resins, acrylic resins, polyolefin resins, and polyacrylonitrile (PAN). A single type among these may be used alone, or two or more types may be used in combination.

The positive electrode active material contained in the positive electrode mixture layer includes a lithium transition metal composite oxide and an additive. The lithium transition metal composite oxide includes secondary particles formed by aggregation of primary particles. The particle size of the primary particles constituting the secondary particles of the lithium transition metal composite oxide is, for example, greater than or equal to 0.02 µm and less than or equal to 2 µm. The particle size of the primary particles is measured as a diameter of a circle circumscribing a particle image observed by a scanning electron microscope (SEM). The average particle size of the secondary particles of the lithium transition metal composite oxide is, for example, greater than or equal to 2 µm and less than or equal to 30 µm. Here, the average particle size means the volume-based median diameter (D50). D50 means a particle size at which, in a volume-based particle size distribution, the cumulative frequency from the smaller particle size side reaches 50 %, and is also called the mid-level diameter. The particle size distribution of the secondary particles of the lithium transition metal composite oxide can be measured with a laser diffraction particle size distribution measuring device (e.g., MT3000II manufactured by MicrotracBEL Corp.) using water as the dispersion medium.

The lithium transition metal composite oxide has a layered structure. Examples of the layered structure of the lithium transition metal composite oxide include a layered structure belonging to the space group R-3m, and a layered structure belonging to the space group C2/m. From the perspective of achieving high capacity and stability of crystal structure, the lithium transition metal composite oxide preferably has a layered structure belonging to the space group R-3m. The layered structure of the lithium transition metal composite oxide may include a transition metal layer and a Li layer.

The lithium transition metal composite oxide is represented by general formula LiₓNiₐCo_{b}Mn_{c}M1ₐM2ₑO_{2-y} (where 0.95 ≤ x ≤ 1.05, 0.75 ≤ a ≤ 0.95, 0 ≤ b ≤ 0.15, 0 ≤ c ≤ 0.25, 0 ≤ d ≤ 0.10, 0 < e ≤ 0.03, 0 ≤ y < 0.05, a+b+c+d+e = 1, M1 is at least one element selected from the group consisting of W, Mg, Mo, Nb, Ti, Si, Al, and Zr, and M2 is at least one element from among Ca and Sr). The content of the metal elements contained in the lithium transition metal composite oxide can be measured, for example, by inductively coupled plasma (ICP) emission spectrometry.

By setting the Ni content in the lithium transition metal composite oxide to greater than or equal to 75 mol% and less than or equal to 95 mol%, a high-capacity battery can be obtained. With a higher Ni content, a battery with a higher capacity can be obtained.

The Co content in the lithium transition metal composite oxide is greater than or equal to 0 mol% and less than or equal to 15 mol%, and Co is an optional component. In other words, the lithium transition metal composite oxide does not need to contain Co. By including Co in the lithium transition metal composite oxide, heat resistance of the battery can be improved.

The Mn content in the lithium transition metal composite oxide is greater than or equal to 0 mol% and less than or equal to 25 mol%, and Mn is an optional component. In other words, the lithium transition metal composite oxide does not need to contain Mn. By including Mn in the lithium transition metal composite oxide, the crystal structure can be stabilized.

The content of M1 (M1 is at least one element selected from the group consisting of W, Mg, Mo, Nb, Ti, Si, Al, and Zr) in the lithium transition metal composite oxide is greater than or equal to 0 mol% and less than or equal to 10 mol%, and M1 is an optional component. In other words, the lithium transition metal composite oxide does not need to contain M1.

The content of M2 (M2 is at least one element from among Ca and Sr)) in the lithium transition metal composite oxide is greater than 0 mol% and less than or equal to 3 mol%, and M2 is an essential component. As described below, M2 is contained in a surface modification layer formed at the surface of the primary particles of the lithium transition metal composite oxide. Part of M2 may be dissolved in the form of solid solution in the lithium transition metal composite oxide.

A surface modification layer containing at least one element from among Ca and Sr (hereinafter referred to as "M2") and also containing at least one element selected from the group consisting of W, Mo, Ti, Si, Nb, and Zr (hereinafter referred to as "M3") is present at the surface of the primary particles of the lithium transition metal composite oxide. This feature prevents the lithium transition metal composite oxide from being corroded or deteriorated due to side reactions with the non-aqueous electrolyte, and improves the charge-discharge cycle characteristic of the secondary battery 10. Here, the surface of the primary particles includes the surface of the secondary particles, and specifically denotes the surface of the secondary particles and the interface between the primary particles. The surface modification layer may be present in the form of dots so as to cover at least part of the surface of the primary particles, or may be present so as to cover the entire surface of the primary particles.

The total amount of M2 contained in the surface modification layer is preferably less than or equal to 1 mol%, and more preferably less than or equal to 0.5 mol%, based on the total number of moles of metal elements other than Li in the lithium transition metal composite oxide. The lower limit of the total amount of M2 is, for example, 0.01 mol%.

The total amount of M3 contained in the surface modification layer is less than or equal to 2 mol%, more preferably less than or equal to 1 mol%, and even more preferably less than or equal to 0.5 mol%, based on the total number of moles of metal elements other than Li in the lithium transition metal composite oxide. The lower limit of the total amount of M3 is, for example, 0.01 mol%.

The presence of the surface modification layer at the surface of the primary particles of the lithium transition metal composite oxide, the presence of M2 contained in the surface modification layer, and the presence of M3 contained in the surface modification layer can be confirmed by performing measurement in a cross section of the secondary particles of the lithium transition metal composite oxide using TEM-EDX (transmission electron microscopy-energy dispersive X-ray spectroscopy). Furthermore, the total amount of M2 and the total amount of M3 can each be measured by, for example, inductively coupled plasma (ICP) emission spectrometry.

A compound containing M2 (hereinafter referred to as "M2 compound") and a compound containing M3 (hereinafter referred to as "M3 compound") may each be adhered to the surface of the primary particles of the lithium transition metal composite oxide. Examples of the M2 compound include oxides, hydroxides, and carbonates that contain M2. Examples of the M3 compound include oxides, hydroxides, carbonates, and sulfates that contain M3.

A compound represented by general formula M2_{α}M3_{β}O_{γ} (where 1 ≤ α ≤ 2, 1 ≤ β ≤ 5, 4 ≤ γ ≤ 9, M2 is at least one element selected from Ca and Sr, and M3 is at least one element selected from W, Mo, Ti, Si, Nb, and Zr) (hereinafter referred to as "M2_{α}M3_{β}O_{γ} compound") may be adhered to the surface of the primary particles of the lithium transition metal composite oxide. At the surface of the primary particles of the lithium transition metal composite oxide, the M2 compound, the M3 compound, and the M2_{α}M3_{β}O_{γ} compound may coexist.

The presence of the M2_{α}M3_{β}O_{γ} compound can be confirmed using synchrotron radiation X-ray diffraction measurement. The M2_{α}M3_{β}O_{γ} compound may, for example, be present in a scattered manner at the surface of the primary particles and secondary particles of the lithium transition metal composite oxide, or may be present in the form of a layer so as to widely cover the surface of the primary particles and secondary particles. In other words, the M2_{α}M3_{β}O_{γ} compound is widely present at the surface of the primary particles in the interior and at the surface of the secondary particles. The secondary particles of the lithium transition metal composite oxide are formed by, for example, aggregation of five or more primary particles, and the surface area of the primary particles is greater in the interior than at the surface of the secondary particles. The M2_{α}M3_{β}O_{γ} compound is, for example, contained more in the interior than at the surface of the secondary particles.

Specific examples of the M2_{α}M3_{β}O_{γ} compound include CaWO₄, CaMoO₃, CaMoO₄, CaTiO₃, Ca₂TiO₄, CaSiO₃, Ca₂SiO₄, CaNbO₃, CaNb₂O₆, CaZrO₃, CaZr₄O₉, SrWO₄, SrMoO₃, SrMoO₄, SrTiO₃, Sr₂TiO₄, SrSiO₃, Sr₂SiO₄, SrNbO₃, SrNb₂O₆, SrZrO₃, and SrZr₄O₉.

The additive contained in the positive electrode active material includes at least one of a phosphate, an oxide, a hydroxide, and a fluoride containing at least one element selected from the group consisting of Ti, Al, W, Zr, Mg, Co, B, and Si. Since the additive reacts with hydrogen fluoride to form a stable substance, the additive reacts preferentially with hydrogen fluoride produced by decomposition of the non-aqueous electrolyte, and can thereby protect the lithium transition metal composite oxide from hydrogen fluoride. Examples of the additive include TiO₂, Ti(OH)₄, Al₂O₃, Al(OH)₃, AlPO₄, AlF₃, WO₃, ZrO₂, ZrF₄, MgO, Mg(OH)₂, MgF₂, CoO, Co₃O₄, CoF₂, B₂O₃, B(OH)₃, SiO₂, and SiO. The additive preferably includes an oxide containing at least one element selected from the group consisting of Ti, Al, W, Zr, Mg, Co, B and Si. As the additive, a single type may be used alone, or two or more types may be used in combination.

The amount of the additive in the positive electrode active material is preferably greater than or equal to 0.01 mass% and less than or equal to 1 mass% based on the mass of the lithium transition metal composite oxide. When a plurality of additives are used, it is preferable that the total amount of all of the additives falls within the above-noted range.

Next, an example method for producing the positive electrode active material according to the present embodiment will be described.

The production process of the positive electrode active material includes a mixing process of mixing a composite oxide with a Li compound and the like to obtain a mixture, a firing process of firing the mixture to obtain a lithium transition metal composite oxide, a water-washing process of washing the fired product with water and performing drying by heating, and an adding process of adding an additive to the lithium transition metal composite oxide. By adding an M2 raw material containing M2 (at least one element selected from Ca and Sr) and an M3 raw material containing M3 (at least one element selected from W, Mo, Ti, Si, Nb, and Zr) in the mixing process, a surface modification layer containing M2 and M3 can be formed at the surface of the primary particles of the lithium transition metal composite oxide.

In the firing process, for example, a metal oxide containing Ni in an amount in the range from 75 mol% to 95 mol%, Co in an amount in the range from 0 mol% to 15 mol%, Mn in an amount in the range from 0 mol% to 25 mol%, and M1 (M1 is at least one element selected from W, Mg, Mo, Nb, Ti, Si, Al, and Zr) in an amount in the range from 0 mol% to 10 mol% is mixed with a Li compound, an M2 raw material, and an M3 raw material to obtain a mixture.

The metal oxide can be obtained, for example, by adding dropwise an alkaline solution of sodium hydroxide or the like to a solution of a metal salt containing Ni and arbitrary metal elements (such as Co, Mn, and M1) while stirring so as to adjust the pH to the alkaline side (e.g., the range from 8.5 to 12.5), thereby causing precipitation (co-precipitation) of a composite hydroxide containing Ni and the arbitrary metal elements, and then heat-treating this composite hydroxide. The heat treatment temperature is not subjected to any particular limitation, but is, for example, in the range from 250 °C to 600 °C.

Examples of the Li compound include Li₂CO₃, LiOH, Li₂O₂, Li₂O, LiNO₃, LiNO₂, Li₂SO₄, LiOH•H₂O, LiH, and LiF. In terms of facilitating adjustment of each of the above parameters to within the ranges specified above, the mixing ratio of the metal oxide and the Li compound is preferably such that, for example, the molar ratio of the total amount of metal elements in the metal oxide to Li is in the range from 1:0.98 to 1:1.1.

Examples of the M2 raw material include Ca(OH)₂, CaO, CaCO₃, CaSO₄, Ca(NO₃)₂, Sr(OH)₂, Sr(OH)₂•8H₂O, Sr(OH)₂,•H₂O, SrO, SrCO₃, SrSO₄, and Sr(NO₃)₂, and these may be dried and dehydrated before use in order to reduce the amount of moisture generated during firing. Further, these compounds may be pulverized or the like to have a particle size of greater than or equal to 0.1 µm and less than or equal to 20 µm. As examples of the M3 raw material, it is possible to cite hydroxides, oxides, carbonates, sulfates, and nitrates of M3 (at least one element selected from the group consisting of W, Mo, Ti, Si, Nb, and Zr). Examples of the M3 raw material include WO₃, Li₂WO₄, MoO₃, Li₂MoO₄, TiO₂, Ti(OH)₄, SiO₂, SiO, Nb₂O₅, Nb₂O₅•nH₂O, and ZrO₂, and these may be dried and dehydrated before use in order to reduce the amount of moisture generated during firing. Further, these compounds may be pulverized or the like to have a particle size of greater than or equal to 0.1 µm and less than or equal to 20 µm.

The metal oxide and the M2 raw material are preferably mixed in such a ratio that the molar ratio of the total amount of metal elements in the metal oxide to the M2 element is, for example, in the range from 1:0.0001 to 1:0.02. When plural types of M2 raw materials are used, the M2 raw materials are mixed so that the total amount of M2 contained in the compounds satisfies the above-noted ratio. Regarding the M3 raw material, the preferred mixing ratio with the metal oxide is the same as above.

The firing process is a multi-stage firing process that includes, for example, at least a first firing process in which firing is performed in an oxygen stream at a temperature of higher than or equal to 300 °C and lower than or equal to 680 °C, and a second firing process in which the fired product obtained by the first firing process is fired in an oxygen stream at a temperature exceeding 680 °C. **In** the first firing process, the temperature is increased to a first set temperature of lower than or equal to 680 °C at a first heating rate of more than or equal to 0.2 °C/min and less than or equal to 4.5 °C/min. **In** the second firing process, the temperature is increased to a second set temperature of lower than or equal to 900 °C at a rate of more than or equal to 0.5 °C/min and less than or equal to 3.5 °C/min. Each of the first and the second heating rates may be provided as a plurality of heating rates for separate temperature ranges, so long as those heating rates are within the above-specified ranges.

The holding time of the first set temperature in the first firing process is preferably less than or equal to 5 hours, and more preferably less than or equal to 3 hours. The holding time of the first set temperature is the time during which the first set temperature is maintained after the first set temperature is reached, and the holding time may be zero. The holding time of the second set temperature in the second firing process is preferably more than or equal to 1 hour and less than or equal to 10 hours, and more preferably more than or equal to 1 hour and less than or equal to 5 hours. The holding time of the second set temperature is the time during which the second set temperature is maintained after the second set temperature is reached. The firing of the mixture is performed, for example, in an oxygen stream having an oxygen concentration of greater than or equal to 60 %, with the flow rate of the oxygen stream being in the range from 0.2 mL/min to 4 mL/min per 10 cm³ of the firing furnace and more than or equal to 0.3 L/min per 1 kg of the mixture.

**In** the water-washing process, the fired product obtained in the firing process is washed with water to remove impurities, and the washed fired product is then heated and dried. As necessary, the fired product is pulverized, classified, and the like to adjust the D50 of the positive electrode active material to fall within a target range. The drying of the fired product after washing with water may be performed at a temperature of lower than 100 °C. An example of a suitable drying temperature is higher than or equal to 150 °C and lower than or equal to 250 °C. The drying process may be carried out either in a vacuum or in atmospheric air. An example drying process time is more than or equal to 1 hour and less than or equal to 5 hours.

**In** the adding process, the additive is added to the lithium transition metal composite oxide to obtain a positive electrode active material. At that time, in order to improve dispersion of the additive, agitation using a rocking mill or the like may be performed after adding the additive.

### [Negative Electrode]

The negative electrode 12 comprises, for example, a negative electrode current collector and a negative electrode mixture layer formed on a surface of the negative electrode current collector. The negative electrode mixture layer is preferably formed on both sides of the negative electrode current collector. As the negative electrode current collector, it is possible to use a foil of a metal such as copper or a copper alloy which is stable in the potential range of the negative electrode 12, a film having such a metal disposed on its surface layer, or the like. The thickness of the negative electrode current collector is, for example, greater than or equal to 5 µm and less than or equal to 30 µm. The negative electrode mixture layer contains, for example, a negative electrode active material and a binder. The thickness of the negative electrode mixture layer is, for example, greater than or equal to 10 µm and less than or equal to 150 µm on one side of the negative electrode current collector. The negative electrode 12 can be produced, for example, by applying a negative electrode mixture slurry containing the negative electrode active material, the binder, and the like onto the surfaces of the negative electrode current collector, and, after drying the applied coating, rolling the coating to form negative electrode mixture layers on both sides of the negative electrode current collector.

No particular limitation is imposed on the negative electrode active material contained in the negative electrode mixture layer so long as it can reversibly occlude and release lithium ions, and a carbon material such as graphite is generally used therefor. The graphite may be either natural graphite such as flake graphite, massive graphite, and earthy graphite, or artificial graphite such as massive artificial graphite and graphitized mesophase carbon microbeads. Further, as the negative electrode active material, a metal that forms an alloy with Li such as Si and Sn, a metal compound containing Si, Sn, or the like, a lithium-titanium composite oxide, and the like may be used, and these materials having a carbon coating provided thereon may also be used. For example, in combination with graphite, it is possible to use a Si-containing compound represented by SiOₓ (where 0.5 ≤ x ≤ 1.6), a Si-containing compound in which fine particles of Si are dispersed in a lithium silicate phase represented by Li_{2y}SiO_{(2+y)} (where 0 < y < 2), or the like.

Examples of the binder contained in the negative electrode mixture layer include styrene-butadiene rubber (SBR), nitrile-butadiene rubber (NBR), carboxymethyl cellulose (CMC) or a salt thereof, polyacrylic acid (PAA) or a salt thereof (which may be PAA-Na, PAA-K, or the like, or a partially neutralized salt), and polyvinyl alcohol (PVA). A single type among these may be used alone, or two or more types may be used in combination.

### [Separator]

As the separator 13, for example, a porous sheet having ion permeability and insulation property is used. Specific examples of the porous sheet include a microporous thin film, woven fabric, and non-woven fabric. As the material of the separator, polyolefins such as polyethylene and polypropylene, cellulose, and the like are suitable. The separator 13 may have a single-layer structure or a laminated structure. Further, on the surface of the separator 13, there may be provided a highly heat-resistant resin layer made of aramid resin or the like, or a filler layer containing an inorganic compound filler.

### [Non-Aqueous Electrolyte]

The non-aqueous electrolyte contains, for example, a non-aqueous solvent and an electrolyte salt dissolved in the non-aqueous solvent. As the non-aqueous solvent, it is possible to use, for example, esters, ethers, nitriles such as acetonitrile, amides such as dimethylformamide, a mixed solvent containing two or more of the foregoing, and the like. The non-aqueous solvent may contain a halogen-substituted product obtained by substituting at least part of hydrogen atoms in the above solvents with halogen atoms such as fluorine. Examples of the halogen-substituted product include fluorinated cyclic carbonate esters such as fluoroethylene carbonate (FEC), fluorinated chain carbonate esters, and fluorinated chain carboxylate esters such as methyl fluoropropionate (FMP).

Examples of the above-noted esters include: cyclic carbonate esters such as ethylene carbonate (EC), propylene carbonate (PC), and butylene carbonate; chain carbonate esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylate esters such as γ-butyrolactone (GBL) and γ-valerolactone (GVL); and chain carboxylate esters such as methyl acetate, ethyl acetate, propyl acetate, methyl propionate (MP), and ethyl propionate (EP).

Examples of the above-noted ethers include: cyclic ethers such as 1,3-dioxolane, 4-methyl-1,3-dioxolane, tetrahydrofuran, 2-methyltetrahydrofran, propylene oxide, 1,2-butylene oxide, 1,3-dioxane, 1,4-dioxane, 1,3,5-trioxane, furan, 2-methylfuran, 1,8-cineole, and crown ethers; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (where 1 < x < 6, and n is 1 or 2), LiB₁₀Cl₁₀, LiCl, LiBr, LiI, chloroborane lithium, lower aliphatic lithium carboxylate, borate salts such as Li₂B₄O₇ and Li(B(C₂O₄)F₂), and imide salts such as LiN(SO₂CF₃)₂ and LiN(CₗF₂ₗ₊₁SO₂)(CₘF₂ₘ₊₁SO₂) (where each of l and m is an integer of 0 or greater). As the lithium salt, a single type among these may be used alone, or a plurality of types may be mixed and used. Among the foregoing, it is preferable to use LiPF₆ from the perspective of ion conductivity, electrochemical stability, and the like. The concentration of the lithium salt is, for example, more than or equal to 0.5 mol and less than or equal to 2 mol per 1 liter of the non-aqueous solvent. Further, vinylene carbonate, a propane sultone based additive, and the like may be added.

### EXAMPLES

While the present disclosure will now be further described using Examples and Comparative Examples, the present disclosure is not limited to the Examples below.

### <Example 1>

### [Production of Positive Electrode Active Material]

A composite hydroxide represented by [Ni_{0.91}Co_{0.03}Mn_{0.06}](OH)₂ and obtained by a co-precipitation method was fired at 500 °C for 8 hours, and a metal oxide (Ni_{0.91}Co_{0.03}Mn_{0.06}O₂) was obtained. Next, Ca(OH)₂, Nb₂O₅, and TiO₂ were added to this metal oxide so that, based on the total amount of Ni, Co, and Mn, the molar ratio of Ca was 0.4 mol%, the molar ratio of Nb was 0.2 mol%, and the molar ratio of Ti was 0.5 mol%. Further, lithium hydroxide monohydrate (LiOH•H₂O) was mixed therein so that the molar ratio of Li to the total amount of Ni, Co, Mn, Ca, Nb, and Ti was 103 mol%, and a mixture was thereby obtained (mixing process). This mixture was fired in an oxygen stream having an oxygen concentration of 95 % (with a flow rate of 2 mL/min per 10 cm³ and 5 L/min per 1 kg of the mixture) at a heating rate of 2.0 °C/min from room temperature to 650 °C, and subsequently at a heating rate of 0.5 °C/min from 650 °C to 740 °C, and a lithium transition metal composite oxide was obtained (firing process). This lithium transition metal composite oxide was washed with water and dried, TiO₂ was then added thereto as the additive, and a positive electrode active material of Example 1 was thereby obtained. The amount of TiO₂ added was 0.1 mass% based on the total mass of the lithium transition metal composite oxide (adding process).

The obtained positive electrode active material was measured using an ICP emission spectrometer (iCAP6300 manufactured by Thermo Fisher Scientific), and as a result, the elements shown in Table 1 below were observed as elements other than Li, O, and impurity elements. Further, it was confirmed by TEM-EDX that a surface modification layer containing Ca, Nb, and Ti was present at the surface of the secondary particles and at the interface between the primary particles inside the secondary particles. Compounds present in the surface modification layer were identified by synchrotron radiation X-ray diffraction measurement, and the presence of CaTiO₃ and CaNbO₃ was thereby confirmed.

### [Production of Positive Electrode]

A positive electrode mixture slurry was prepared by mixing together 95 parts by mass of the above positive electrode active material, 3 parts by mass of acetylene black (AB), and 2 parts by mass of polyvinylidene fluoride (PVDF), and further adding thereto an appropriate amount of N-methyl-2-pyrrolidone (NMP). Next, the positive electrode mixture slurry was applied onto both sides of a positive electrode current collector made of aluminum foil, and the applied coating was dried. After that, the coating was rolled using a roller, the resulting product was cut into a predetermined electrode size, and a positive electrode was thereby produced. In a part of the positive electrode, there was provided an exposed portion where a surface of the positive electrode current collector was exposed.

### [Preparation of Non-Aqueous Electrolyte]

Ethylene carbonate (EC), ethyl methyl carbonate (EMC), and dimethyl carbonate (DMC) were mixed together in a volume ratio of 3:3:4. Into this mixed solvent, lithium hexafluorophosphate (LiPF₆) was dissolved to a concentration of 1.2 mol/L, and a non-aqueous electrolyte was thereby prepared.

### [Production of Test Cell]

A positive electrode lead was attached to the exposed portion of the positive electrode, and a negative electrode lead was attached to a lithium metal foil serving as a negative electrode. The positive electrode and the negative electrode were wound in a spiral shape with an interposed separator made of polyolefin, and the resulting product was shaped by being pressed in a radial direction to produce a flat-shaped spiral-type electrode assembly. This electrode assembly was housed in an outer casing composed of an aluminum laminate sheet, and after injecting the above-described non-aqueous electrolyte therein, the opening of the outer casing was sealed to obtain a test cell.

### [Evaluation of Capacity Retention Rate]

In a 25 °C environment, the test cell was charged at a constant current of 0.2 It until the battery voltage reached 4.3 V, and then charged at a constant voltage of 4.3 V until the current value reached 0.01 It. After that, the test cell was discharged at a constant current of 0.2 It until the battery voltage reached 2.5 V. Using this charging and discharging process as one cycle, 30 cycles were performed. The capacity retention rate of the test cell over the charge-discharge cycles was calculated by the following formula. Capacity retention rate = (Discharge capacity in the 30th cycle / Discharge capacity in the 1st cycle) × 100

### [Evaluation of Rate of Resistance Increase After High-Temperature Storage]

In a 25 °C environment, the test cell was subjected to two cycles of the above-described charging and discharging process. After that, in a 25 °C environment, the test cell was charged at a constant current of 0.2 It until the battery voltage reached 4.3 V, and then charged at a constant voltage of 4.3 V until the current value reached 0.01 It. Further, a constant current of 0.5 It was applied for 10 seconds, and by dividing the potential difference generated at that time by the current value, initial resistance was determined.

This test cell was left to stand in a 60 °C environment for 15 days, and was subsequently discharged in a 25 °C environment at a constant current of 0.2 It until the battery voltage reached 2.5 V. After that, in a 25 °C environment, the test cell was charged at a constant current of 0.2 It until the battery voltage reached 4.3 V, and then charged at a constant voltage of 4.3 V until the current value reached 0.01 It. Further, a constant current of 0.5 It was applied for 10 seconds, and by dividing the potential difference generated at that time by the current value, resistance after storage was determined. The rate of resistance increase after high-temperature storage was calculated using the following formula based on the above initial resistance and the resistance after storage. Rate of resistance increase after high-temperature storage (%) = (Resistance after storage - Initial resistance) / Initial resistance × 100

### <Examples 2 to 6>

Test cells were produced and evaluated in the same manner as in Example 1 except that, in the adding process in the production of the positive electrode active material, the composition and amount of the additive added to the lithium transition metal composite oxide were changed as shown in Table 1.

### <Examples 7 to 12>

Test cells were produced in the same manner as in Example 1 except that, in the production of the positive electrode active material, the following points were changed.
(1) In the mixing process, the amounts of Ca(OH)₂ and Sr(OH)₂ added were adjusted so that the molar ratios of Ca and Sr to the total amount of Ni, Co, and Mn contained in the lithium transition metal composite oxide were as shown in Table 1.
(2) In the mixing process, ZrO₂ was added instead of Nb₂O₅ and TiO₂, and the amount of ZrO₂ added was adjusted so that the molar ratio of Zr to the total amount of Ni, Co, and Mn contained in the lithium transition metal composite oxide was as shown in Table 1.
(3) In the adding process, the composition and amount of the additive added to the lithium transition metal composite oxide were changed as shown in Table 1.

In Examples 7 to 9, it was confirmed by TEM-EDX that a surface modification layer containing Ca and Zr was present at the surface of the secondary particles and at the interface between the primary particles inside the secondary particles. The compounds present in the surface modification layer were identified by synchrotron radiation X-ray diffraction measurement, and the presence of CaZrO₃ was thereby confirmed. Further, in Examples 10 to 12, it was confirmed by TEM-EDX that a surface modification layer containing Ca, Sr, and Zr was present at the surface of the secondary particles and at the interface between the primary particles inside the secondary particles. The compounds present in the surface modification layer were identified by synchrotron radiation X-ray diffraction measurement, and the presence of CaZrO₃ and SrZrO₃ was thereby confirmed.

### <Comparative Example 1>

A test cell was produced and evaluated in the same manner as in Example 1 except that, in the mixing process in the production of the positive electrode active material, Ca(OH)₂, Nb₂O₅, and TiO₂ were not added, and in the adding process, TiO₂ was not added. It was confirmed by TEM-EDX that no surface modification layer was present at the surface of the secondary particles and at the interface between the primary particles inside the secondary particles.

### <Comparative Example 2>

A test cell was produced in the same manner as in Example 1 except that, in the production of the positive electrode active material, the following points were changed.
(1) In the mixing process, the amount of Ca(OH)₂ added was adjusted so that the molar ratio of Ca to the total amount of Ni, Co, and Mn contained in the lithium transition metal composite oxide was 0.3 mol%.
(2) In the mixing process, Nb₂O₅ and TiO₂ were not added.
(3) In the adding process, TiO₂ was not added.

### <Comparative Example 3>

A test cell was produced in the same manner as in Example 1 except that, in the mixing process in the production of the positive electrode active material, Ca(OH)₂ and Nb₂O₅ were not added, and in the adding process, TiO₂ was not added.

### <Comparative Example 4>

A test cell was produced in the same manner as in Example 1 except that, in the production of the positive electrode active material, the following points were changed.
(1) In the mixing process, the amount of Ca(OH)₂ added was adjusted so that the molar ratio of Ca to the total amount of Ni, Co, and Mn contained in the lithium transition metal composite oxide was 0.3 mol%.
(2) In the mixing process, ZrO₂ was added instead of Nb₂O₅ and TiO₂, and the amount of ZrO₂ added was adjusted so that the molar ratio of Zr to the total amount of Ni, Co, and Mn contained in the lithium transition metal composite oxide was 0.5 mol%.
(3) In the adding process, TiO₂ was not added.

The capacity retention rate and the rate of resistance increase after high-temperature storage of each of the test cells of the Examples and Comparative Examples are shown in Table 1. Table 1 also shows the composition of the lithium transition metal composite oxide, as well as the composition and amount of the additive added. The capacity retention rates and the rates of resistance increase after high-temperature storage of the test cells of Examples 1 to 12 and Comparative Examples 2 to 4 shown in Table 1 are expressed relative to the capacity retention rate and the rate of resistance increase after high-temperature storage of the test cell of Comparative Example 1, each of which is assumed to be 100.

**[table 1]**

| | Composition of lithium transition metal composite oxide [mol%] | | | | | Additive | | Capacity retention rate [%] | Rate of resistance increase after high-temperature storage [%] |
|---|---|---|---|---|---|---|---|---|---|
| | Ni | Co | Mn | M1 | M2 | Composition | Amount added [wt%] | | |
| Example 1 | 89.9 | 3 | 6 | Nb 0.2 | Ca 0.4 | TiO₂ | 0.1 | 106 | 82 |
| | | | | Ti 0.5 | | | | | |
| Example 2 | 89.9 | 3 | 6 | Nb 0.2 | Ca 0.4 | TiO₂ | 0.5 | 107 | 69 |
| | | | | Ti 0.5 | | | | | |
| Example 3 | 89.9 | 3 | 6 | Nb 0.2 | Ca 0.4 | Al(PO₄) | 0.1 | 106 | 77 |
| | | | | Ti 0.5 | | | | | |
| Example 4 | 89.9 | 3 | 6 | Nb 0.2 | Ca 0.4 | Al(PO₄) | 1.0 | 108 | 65 |
| | | | | Ti 0.5 | | | | | |
| Example 5 | 89.9 | 3 | 6 | Nb 0.2 | Ca 0.4 | Al₂O₃ | 0.1 | 106 | 76 |
| | | | | Ti 0.5 | | | | | |
| Example 6 | 89.9 | 3 | 6 | Nb 0.2 | Ca 0.4 | Al₂O₃ | 0.5 | 107 | 60 |
| | | | | Ti 0.5 | | | | | |
| Example 7 | 90.2 | 3 | 6 | Zr 0.5 | Ca 0.3 | ZrO₂ | 0.1 | 106 | 78 |
| Example 8 | 90.2 | 3 | 6 | Zr 0.5 | Ca 0.3 | ZrO₂ | 0.3 | 107 | 72 |
| Example 9 | 90.2 | 3 | 6 | Zr 0.5 | Ca 0.3 | AlF₃ | 0.3 | 107 | 77 |
| Example 10 | 90.4 | 3 | 6 | Zr 0.3 | Ca 0.2 | WO₃ | 0.1 | 107 | 86 |
| | | | | | Sr 0.1 | | | | |
| Example 11 | 90.4 | 3 | 6 | Zr 0.3 | Ca 0.2 | Al(OH)₃ | 0.1 | 107 | 82 |
| | | | | | Sr 0.1 | | | | |
| Example 12 | 90.4 | 3 | 6 | Zr 0.3 | Ca 0.2 | Al(OH)₃ | 0.5 | 107 | 72 |
| | | | | | Sr 0.1 | | | | |
| Comparative Example 1 | 91 | 3 | 6 | - | - | - | - | 100 | 100 |
| Comparative Example 2 | 90.7 | 3 | 6 | - | Ca 0.3 | - | - | 102 | 95 |
| Comparative Example 3 | 90.5 | 3 | 6 | Ti 0.5 | - | - | - | 101 | 97 |
| Comparative Example 4 | 90.2 | 3 | 6 | Zr 0.5 | Ca 0.3 | - | - | 106 | 92 |

As shown in Table 1, the test cells of the Examples had a lower rate of resistance increase after high-temperature storage compared to the test cells of the Comparative Examples, and increase in reaction resistance due to high-temperature storage could be suppressed. Further, the capacity retention rates of the test cells of the Examples were equivalent to or higher than the capacity retention rate of the test cell of Comparative Example 4, in which a surface modification layer was formed at the surface of the primary particles of the lithium transition metal composite oxide but no additive was added. Accordingly, it can be seen that the charge-discharge cycle characteristic and the high-temperature storage characteristic are improved by forming, in a lithium transition metal composite oxide having a predetermined composition, a surface modification layer containing a predetermined element at the surface of the primary particles, and by further adding an additive including a compound containing a predetermined element to the lithium transition metal composite oxide.

The present disclosure is further illustrated by the following embodiments.
Configuration 1:
   A positive electrode active material for non-aqueous electrolyte secondary battery, including a lithium transition metal composite oxide having a layered structure, and an additive, wherein
   the lithium transition metal composite oxide is represented by general formula LiₓNiₐCo_{b}Mn_{c}M1ₐM2ₑO_{2-y} (where 0.95 ≤ x ≤ 1.05, 0.75 ≤ a ≤ 0.95, 0 ≤ b ≤ 0.15, 0 ≤ c ≤ 0.25, 0 ≤ d ≤ 0.10, 0 < e ≤ 0.03, 0 ≤ y < 0.05, a+b+c+d+e = 1, M1 is at least one element selected from the group consisting of W, Mg, Mo, Nb, Ti, Si, Al, and Zr, and M2 is at least one element from among Ca and Sr), and includes secondary particles formed by aggregation of primary particles,
   a surface modification layer containing at least one element from among Ca and Sr and also containing at least one element selected from the group consisting of W, Mo, Ti, Si, Nb, and Zr is present at a surface of the primary particles, and
   the additive includes at least one of a phosphate, an oxide, a hydroxide, and a fluoride containing at least one element selected from the group consisting of Ti, Al, W, Zr, Mg, Co, B, and Si.
Configuration 2:
   The positive electrode active material for non-aqueous electrolyte secondary battery **according** to Configuration 1, wherein a total amount of Ca and Sr contained in the surface modification layer is less than or equal to 1 mol% based on a total number of moles of metal elements other than Li in the lithium transition metal composite oxide.
Configuration 3:
   The positive electrode active material for non-aqueous electrolyte secondary battery according to Configuration 1 or 2, wherein a total amount of W, Mo, Ti, Si, Nb, and Zr contained in the surface modification layer is less than or equal to 2 mol% based on a total number of moles of metal elements other than Li in the lithium transition metal composite oxide.
Configuration 4:
   The positive electrode active material for non-aqueous electrolyte secondary battery according to any one of Configurations 1 to 3, wherein an amount of the additive in the positive electrode active material for non-aqueous electrolyte secondary battery is greater than or equal to 0.01 mass% and less than or equal to 1 mass% based on a mass of the lithium transition metal composite oxide.
Configuration 5:
   The positive electrode active material for non-aqueous electrolyte secondary battery according to any one of Configurations 1 to 4, wherein a compound represented by general formula M2_{α}M3_{β}O_{γ} (where 1 ≤ α ≤ 2, 1 ≤ β ≤ 5, 4 ≤ γ ≤ 9, M2 is at least one element from among Ca and Sr, and M3 is at least one element selected from the group consisting of W, Mo, Ti, Si, Nb, and Zr) is adhered to the surface of the primary particles.
Configuration 6:
   A non-aqueous electrolyte secondary battery, comprising a positive electrode including the positive electrode active material for non-aqueous electrolyte secondary battery according to any one of Configurations 1 to 5, a negative electrode, and a non-aqueous electrolyte.

### REFERENCE SIGNS LIST

10 secondary battery; 11 positive electrode; 12 negative electrode; 13 separator; 14 electrode assembly; 16 outer casing; 17 sealing assembly; 18, 19 insulating plate; 20 positive electrode lead; 21 negative electrode lead; 22 grooved portion; 23 internal terminal plate; 24 lower vent member; 25 insulating member; 26 upper vent member; 27 cap; 28 gasket.

## Claims

1. A positive electrode active material for non-aqueous electrolyte secondary battery, including
a lithium transition metal composite oxide having a layered structure, and an additive, wherein
the lithium transition metal composite oxide is represented by general formula LiₓNiₐCo_{b}Mn_{c}M1ₐM2ₑO_{2-y} (where 0.95 ≤ x ≤ 1.05, 0.75 ≤ a ≤ 0.95, 0 ≤ b ≤ 0.15, 0 ≤ c ≤ 0.25, 0 ≤ d ≤ 0.10, 0 < e ≤ 0.03, 0 ≤ y < 0.05, a+b+c+d+e = 1, M1 is at least one element selected from the group consisting of W, Mg, Mo, Nb, Ti, Si, Al, and Zr, and M2 is at least one element from among Ca and Sr), and includes secondary particles formed by aggregation of primary particles,
a surface modification layer containing at least one element from among Ca and Sr and also containing at least one element selected from the group consisting of W, Mo, Ti, Si, Nb, and Zr is present at a surface of the primary particles, and
the additive includes at least one of a phosphate, an oxide, a hydroxide, and a fluoride containing at least one element selected from the group consisting of Ti, Al, W, Zr, Mg, Co, B, and Si.

2. The positive electrode active material for non-aqueous electrolyte secondary battery according to claim 1, wherein a total amount of Ca and Sr contained in the surface modification layer is less than or equal to 1 mol% based on a total number of moles of metal elements other than Li in the lithium transition metal composite oxide.

3. The positive electrode active material for non-aqueous electrolyte secondary battery according to claim 1, wherein a total amount of W, Mo, Ti, Si, Nb, and Zr contained in the surface modification layer is less than or equal to 2 mol% based on a total number of moles of metal elements other than Li in the lithium transition metal composite oxide.

4. The positive electrode active material for non-aqueous electrolyte secondary battery according to claim 1, wherein an amount of the additive in the positive electrode active material for non-aqueous electrolyte secondary battery is greater than or equal to 0.01 mass% and less than or equal to 1 mass% based on a mass of the lithium transition metal composite oxide.

5. The positive electrode active material for non-aqueous electrolyte secondary battery according to claim 1, wherein a compound represented by general formula M2_{α}M3_{β}O_{γ} (where 1 ≤ α ≤ 2, 1 ≤ β ≤ 5, 4 ≤ γ ≤ 9, M2 is at least one element from among Ca and Sr, and M3 is at least one element selected from the group consisting of W, Mo, Ti, Si, Nb, and Zr) is adhered to the surface of the primary particles.

6. A non-aqueous electrolyte secondary battery, comprising a positive electrode including the positive electrode active material for non-aqueous electrolyte secondary battery according to any one of claims 1 to 5, a negative electrode, and a non-aqueous electrolyte.
